# EUROPEAN PATENT SPECIFICATION

(11) **EP 3 872 327 B1**
(45) Date of publication and mention of the grant of the patent: **14.06.2023**
(21) Application number: 21170238.6
(22) Date of filing: 13.02.2017
(51) Int. Cl.: F02C 7/277, F01D 19/02, F02C 7/36, F01D 15/10, F01D 25/12

(54) **ELECTRO-PNEUMATIC GAS TURBINE ENGINE MOTORING SYSTEM FOR BOWED ROTOR ENGINE STARTS**
ELEKTROPNEUMATISCHES GASTURBINENTRIEBWERKMOTORISIERUNGSSYSTEM ZUM ANLASSEN VON MOTOREN MIT GEBOGENEM ROTOR
SYSTÈME DE MOTORISATION DE MOTEUR À TURBINE À GAZ ÉLECTROPNEUMATIQUE POUR DÉMARRAGE DE MOTEUR À ROTOR COURBÉ

(30) Priority: 12.02.2016 US 201662294554 P
(43) Date of publication of application: 01.09.2021
(62) Divisional of application: 17155902.4
(73) Proprietor: Hamilton Sundstrand Corporation, Charlotte, NC 28217-4578 (US)
(72) Inventor: PECH, John T., Canton, 06019 (US)
(74) Representative: Dehns

(56) References cited:
- EP-A2- 2 554 799
- US-A1- 2013 340 442
- US-A1- 2014 123 673
- US-A1- 2014 373 553

## Description

### BACKGROUND

The embodiments herein generally relate methods for cooling gas turbine engines.

Aircraft gas turbine engines are being designed with tighter internal clearances between engine cases and blades of the compressor and turbine to increase efficiency and reduce fuel burn. These tighter clearances can result in compressor blade tips and turbine blade tips rubbing on the engine cases if the engine core bows as it cools down between flights and an engine start is attempted.

After engine shutdown, the main shafts, compressor disks, turbine disks and other parts with large thermal mass cool at different rates. The heat rises to the top of the engine allowing the lower portions of these parts to become cooler than the upper portions. This causes blade tip clearance between the engine case and blades of the compressor and turbine to decrease as the engine shafts and cases bow temporarily due to uneven thermal conditions. This does not present a problem for the engine unless an engine start is attempted while the bowed condition exists. To address this engine manufacturers have found that motoring the engine at relatively low speed for a period of time prior to engine start allow the parts to achieve uniform thermal conditions and eliminate the bowed condition restoring blade tip to engine case clearances.

The problem is how to motor the engine at very specific speeds for up to four minutes prior to engine start, and/or how to motor the engine at a slow speed continuously after engine shutdown to prevent the rotating parts from bowing due to uneven cooling? Pneumatic or Air Turbine Starters are typically duty cycle limited due to lubrication issues and heat dissipation. Butterfly type start valves are typically solenoid actuated and have diaphragms and linkage in the actuator piston assembly that are prone to wear if they are being used to modulate and control starter speed. This type of operation decreases the valve and start life significantly. A more efficient method of motoring the gas turbine engine that does not cause excessive wear and tear is desired. EP2554799 A2 discloses a method of cooling a gas turbine engine according to the prior art.

### BRIEF DESCRIPTION

Described, there is an engine starting system for a gas turbine engine is provided, the engine starting system comprising: a gas turbine engine including rotational components comprising an engine compressor, an engine turbine, and a rotor shaft operably connecting the engine turbine to the engine compressor, wherein each rotational component is configured to rotate when any one of the rotational components is rotated; an electro-pneumatic starter operably connected to at least one of the rotational components, the electro-pneumatic starter being configured to rotate the rotational components; an electric drive motor operably connected to the electro-pneumatic starter, the electric drive motor being configured to rotate the rotational components through the electro-pneumatic starter; and a motor controller in electronic communication with the electric drive motor, the motor controller being configured to command the electric drive motor to rotate the rotational components at a selected angular velocity for a selected period of time.

In addition to one or more of the features described above, or as an alternative, further examples of the engine starting system may include an accessory gearbox operably connecting the electro-pneumatic starter to at least one of the rotational components.

In addition to one or more of the features described above, or as an alternative, in further examples of the engine starting system the electro-pneumatic starter further comprises a turbine wheel including a hub integrally attached to a turbine rotor shaft and a plurality of turbine blades extending radially from the hub, the turbine rotor shaft being operably connected to at least one of the rotational components and configured to rotate the rotational components when air flows through the turbine blades and rotates the turbine wheel.

In addition to one or more of the features described above, or as an alternative, in further examples of the engine starting system the electric drive motor is operably connected to the electro-pneumatic starter through a starter cluster gear system.

In addition to one or more of the features described above, or as an alternative, further examples of the engine starting system may include: an auxiliary power unit fluidly connected to the electro-pneumatic starter and electrically connected to the electric drive motor, the auxiliary power unit being configured to generate electricity to power the electric drive motor and provide air to the electro-pneumatic starter to rotate the turbine blades.

In addition to one or more of the features described above, or as an alternative, further examples of the engine starting system may include: a starter air valve fluidly connecting the auxiliary power unit to the electro-pneumatic starter, the starter air valve being configured to adjust airflow from the auxiliary power unit to the electro-pneumatic starter.

According to another example, a method of assembling an engine starting system for a gas turbine engine is provided, the method comprising: obtaining a gas turbine engine including rotational components comprising an engine compressor, an engine turbine, and a rotor shaft operably connecting the engine turbine to the engine compressor, wherein each rotational component is configured to rotate when any one of the rotational components is rotated; operably connecting an electro-pneumatic starter to at least one of the rotational components, the electro-pneumatic starter being configured to rotate the rotational components; operably connecting an electric drive motor to the electro-pneumatic starter, the electric drive motor being configured to rotate the rotational components through the electro-pneumatic starter; and electrically connecting a motor controller to electric drive motor, the motor controller being configured to command the electric drive motor to rotate the rotational components at a selected angular velocity for a selected period of time.

In addition to one or more of the features described above, or as an alternative, further examples of the method of assembling an engine starting system may include where the electro-pneumatic starter is operably connected to at least one of the rotational components through an accessory gearbox.

In addition to one or more of the features described above, or as an alternative, in further examples of the method of assembling an engine starting system the electro-pneumatic starter further comprises: a turbine wheel including a hub integrally attached to a turbine rotor shaft and a plurality of turbine blades extending radially from the hub, wherein the turbine rotor shaft is configured to rotate the rotational components when air flows through the turbine blades and rotates the turbine wheel.

In addition to one or more of the features described above, or as an alternative, further examples of the method of assembling an engine starting system may include: fluidly connecting an auxiliary power unit to the electro-pneumatic starter, the auxiliary power unit being configured to provide air to the electro-pneumatic starter to rotate the turbine blades; and electrically connecting the electric drive motor to the auxiliary power unit, the auxiliary power unit being configured to generate electricity to power the electric drive motor.

In addition to one or more of the features described above, or as an alternative, in further examples of the method of assembling an engine starting system a starter air valve fluidly connects the auxiliary power unit to the electro-pneumatic starter, the starter air valve being configured to adjust airflow from the auxiliary power unit to the electro-pneumatic starter.

According to the claimed embodiments, a method of cooling a gas turbine engine is provided as claimed in either claim 1 or claim 5.

In addition to one or more of the features described above, or as an alternative, further embodiments of the method of cooling a gas turbine engine may include: controlling, using a motor controller, operation of the electric drive motor, the motor controller being configured to command the electric drive motor to rotate the rotational components at a selected angular velocity for a selected period of time.

Technical effects of embodiments of the present disclosure include utilizing an electro-pneumatic starter operably connected to an aircraft main engine for cool-down motoring to prevent bowed rotor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft engine starting system;
FIG. 2 is a schematic illustration of an example electro-pneumatic starter of the aircraft engine starting system of FIG. 1;
FIG. 3 is a flow diagram illustrating a method of assembling an engine starting system for a gas turbine engine; and
FIG. 4 is a flow diagram illustrating a method of cooling a gas turbine engine, according to an embodiment of the present disclosure.

### DETAILED DESCRIPTION

A detailed description of one or more embodiments of the disclosed method are presented herein by way of exemplification and not limitation with reference to the Figures.

Various embodiments of the present disclosure are related to a bowed rotor start mitigation system in a gas turbine engine. Embodiments can include using an electro-pneumatic starter to control a rotor speed of a gas turbine engine to mitigate a bowed rotor condition using a cool-down motoring process. Cool-down motoring may be performed by running an engine starting system at a lower speed with a longer duration than typically used for engine starting using an electro-pneumatic starter to maintain a rotor speed and/or profile. Cool-down motoring (engine bowed rotor motoring) may be performed by the electro-pneumatic starter, which may rotate the gas turbine engine continuously between about 0 to 3000 RPM (engine core speed).

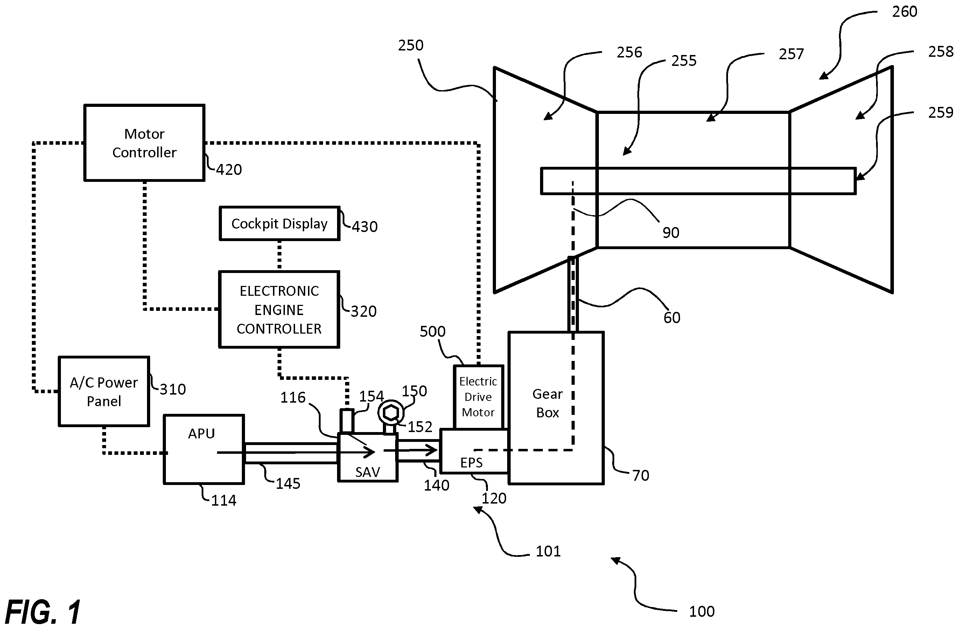

Referring now to the figures, FIG. 1 shows a block diagram of a gas turbine engine 250 and an associated engine starting system 100 with a valve system 101. The valve system 101 includes a starter air valve (SAV) 116 operably connected in fluid communication with an electro-pneumatic starter (EPS) 120 of the engine starting system 100 through at least one duct 140. The valve system 101 is operable to receive a compressed air flow from a compressed air source through one or more ducts 145. In the illustrated example, the compressed air source is an auxiliary power unit (APU) 114. The compressed air source may also be a ground cart or a cross-engine bleed.

An electro-pneumatic starter 120 of the engine starting system 100 is operably connected to the gas turbine engine 250 through an accessory gearbox 70 and drive shaft 60 (e.g., a tower shaft), as shown in FIG. 1. As depicted in the example of FIG. 1, the electro-pneumatic starter 120 is connected to the gas turbine engine 250 by a drive line 90, which runs from an output of the electro-pneumatic starter 120 to the accessory gearbox 70 through the drive shaft 60 to a rotor shaft 259 of the gas turbine engine 250. Operable connections may include gear mesh connections. The electro-pneumatic starter 120 is configured to initiate a startup process of the gas turbine engine 250 driving rotation of the rotor shaft 259 of a starting spool 255 of the gas turbine engine 250. The rotor shaft 259 operably connects an engine compressor 256 to an engine turbine 258. Thus, once the engine compressor 256 starts spinning, air is pulled into combustion chamber 257 and mixes with fuel for combustion. Once the air and fuel mixture combusts in the combustion chamber 257, a resulting compressed gas flow drives rotation of the engine turbine 258, which rotates the engine turbine 258 and subsequently the engine compressor 256. Once the startup process has been completed, the electro-pneumatic starter 120 can be disengaged from the gas turbine engine 250 to prevent over-speed conditions when the gas turbine engine 250 operates at its normal higher speeds. Although only a single instance of an engine compressor-turbine pair of starting spool 255 is depicted in the example of FIG. 1, it will be understood that examples can include any number of spools, such as high/mid/low pressure engine compressor-turbine pairs within the gas turbine engine 250.

The electro-pneumatic starter 120 is further operable to drive rotation of the rotor shaft 259 at a lower speed for a longer duration than typically used for engine starting in a motoring mode of operation (also referred to as cool-down motoring) to prevent/reduce a bowed rotor condition. If a bowed rotor condition has developed, for instance, due to a hot engine shutdown and without taking further immediate action, cool-down motoring may be performed by the electro-pneumatic starter 120 to reduce a bowed rotor condition by driving rotation of the rotor shaft 259. The gas turbine engine can also be motored continuously after shutdown using the electro-pneumatic starter electric motor function to prevent the bowed rotor condition from occurring as the gas turbine engine cools.

An electronic engine controller 320, such as full authority digital engine control (FADEC), typically controls engine starting system 100, the gas turbine engine 250, and controls performance parameters of the gas turbine engine 250 such as for example engine temperature, engine, speed, and fuel flow. The electronic engine controller 320 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The electric engine controller 320 controls valve operation, for instance, modulation of the starter air valve 116 to control a motoring speed of the gas turbine engine 250 during cool-down motoring. The starter air valve 116 delivers air through a duct 140 to the electro-pneumatic starter 120. If the starter air valve 116 fails shut, a corresponding manual override 150 can be used to manually open the starter air valve 116. The manual override 150 can include a tool interface 152 to enable a ground crew to open the starter air valve 116. During regular operation, the starter air valve 116 may be opened and closed using a solenoid 154. The solenoid 154 may be modulated to control a motoring speed of the gas turbine engine 250 during cool-down motoring. The solenoid 154 may be in electrical communication with the electronic engine controller 320.

Alternatively, the motoring speed of the gas turbine engine 250 may also be controlled by an electric drive motor 500. The electric drive motor 500 may be operably connected to the pneumatic starter 120 in such a way that the electric drive motor 500 drives the pneumatic starter 120. Advantageously, an electric drive motor 500 may be utilized for cool-down motoring in many scenarios including but not limited to when the solenoid 154 fails and can no longer modulate the starter air valve 116 for cool-down motoring. In the event the starter air valve 116 is failed and a manual start is required, the electronic engine controller 320 may transmit a message to be displayed on a cockpit display 320 indicating that a manual start is required. In this case, the electric drive motor 500 could drive the electro-pneumatic starter 120 to motor the gas turbine engine 250 until it is cooled and then the electronic engine controller 320 could provide a cockpit message to the cockpit display 430 indicating when the engine is cooled sufficiently to allow a crew member to manually open the starter air valve 116 using the manual override 150 and start the gas turbine engine 250. Also advantageously, the electric drive motor 500 may be used regularly for cool-down motoring in order to reduce wear-tear on the starter air valve 116 and associated solenoid 154 that may be caused by the modulation of the starter air valve 116 when the starter air valve 116 performs cool down motoring.

The electric drive motor 500 may be used as the primary means to the drive electro-pneumatic starter 120 for motoring the gas turbine engine 250 and the starter air valve 116 may be used as secondary means to drive the electro-pneumatic starter 120 for motoring the gas turbine engine 350 or vice versa. The electric drive motor 500 and the starter air valve 116 may also be used in combination with each other to drive the electro-pneumatic starter 120 and motor the gas turbine engine 350. As seen in FIG.1, the electric drive motor 500 is operably connected through the electro-pneumatic starter 120 to at least one of the rotational components 260 of the gas turbine engine 250. The electro-pneumatic starter 120 and accessory gear box 70 may be operably connected the electric drive motor 500 to at least one of the rotational components 260 of the gas turbine engine 250. The rotational components 260 may include but are not limited to the engine compressor 265, the engine turbine 258, and the rotor shaft 259 operably connecting the engine turbine 258 to the engine compressor 256. Each rotational component 260 is configured to rotate when any one of the rotational components 260 is rotated, thus the rotation components may rotate in unison.

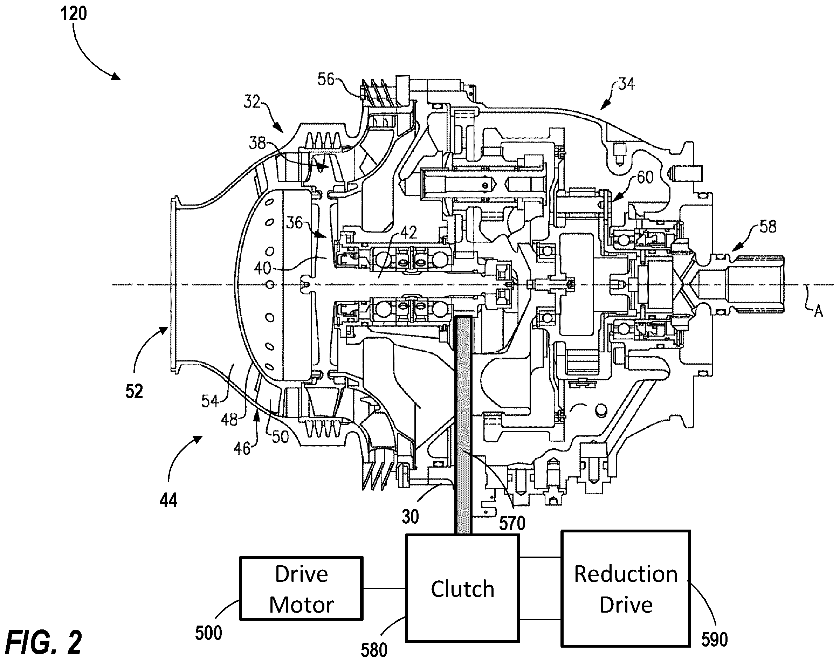

The electric drive motor 500 is configured to rotate the rotational components 260 of the gas turbine engine 250 for cool-down motoring to prevent bowed rotor. The electric drive motor 500 is electrically connected to the auxiliary power unit 114. As mentioned above, the auxiliary power unit 114 is configured to provide air to the electro-pneumatic starter 120 to rotate the turbine blades 38 (see FIG. 2). The auxiliary power unit 114 is also configured to generate electricity to power the electric drive motor 500. The auxiliary power unit 114 may be electrically connected to the electric drive motor 500 through an A/C power panel 310. The electric drive motor 500 may also be used to generate electricity when the rotational components 260 are rotating under power of the gas turbine engine 250.

The electric drive motor 500 may be controlled by the electronic engine controller 320 and/or a motor controller 420 electrically connected to the electric drive motor 500. The motor controller 420 is in electronic communication with the electric drive motor 500. The motor controller 420 is configured to command the electric drive motor 500 to rotate the rotational components 260 at a selected angular velocity for a selected period of time to perform cool-down motoring. The motor controller 420 may include at least one processor and at least one associated memory comprising computer-executable instructions that, when executed by the processor, cause the processor to perform various operations. The processor may be but is not limited to a single-processor or multi-processor system of any of a wide array of possible architectures, including FPGA, central processing unit (CPU), ASIC, digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

Referring now to FIG. 2, FIG. 2 schematically illustrates a non-limiting example of an electro-pneumatic starter 120 that may be used to initiate the rotation of a gas turbine engine 250 (see FIG. 1), such as a turbofan engine through an accessory gearbox 70, as described above. As mentioned above, the electro-pneumatic starter 120 may serve as a primary or secondary means of motoring the gas turbine engine 250. The electro-pneumatic starter 120 generally includes a housing assembly 30 that includes at least a turbine section 32 and an output section 34. The turbine section 32 includes a turbine wheel 36 with a plurality of turbine blades 38, a hub 40, and a turbine rotor shaft 42. The turbine blades 38 of the turbine wheel 36 are located downstream of an inlet housing assembly 44 which includes an inlet housing 46 which contains a nozzle 48. The nozzle 48 includes a plurality of stator vanes 50 which direct compressed air flow from an inlet 52 through an inlet flow path 54. The compressed air flows past the vanes 50 drives the turbine wheel 36 then is exhausted through an outlet 56.

The turbine wheel 36 is driven by the compressed airflow such that the turbine rotor shaft 42 may mechanically drive a starter output shaft 58 though a gear system 60, such as a planetary gear system. The electro-pneumatic starter 120 thereby transmits relatively high loads through the gear system 60 to convert the pneumatic energy from the compressed air into mechanical energy to, for example, rotate the gas turbine engine 250 for start. The turbine blades 38 of the turbine wheel 36 and the vanes 50 of the nozzle 48 - both of which are defined herein as airfoils - may be defined with computational fluid dynamics (CFD) analytical software and are optimized to meet the specific performance requirements of a specific electro-pneumatic starter.

As described above, the electro-pneumatic starter 120 is operably connected to the electric drive motor 500. As seen in FIG. 2, the electric drive motor 500 may operably connect to the turbine wheel 36 through a mechanical connection 570. The mechanical connection may be a starter cluster gear system 570. The drive motor 500 is configured to rotate the electro-pneumatic starter cluster gear system 570, which transfers rotation to the gear box 70 and then to rotational components 260 of the gas turbine engine 250. The drive motor 500 may further include a clutch 580 and a reduction drive 590 to operably connect to the turbine wheel 36. The clutch 580 may selectively engage and disengage the electric drive motor 500 from the cluster gear system 570. The reduction drive 590 may serve as a gear reduction mechanism reducing the output speed of the electric drive motor 500 to the speed required drive the cluster gear system 570.

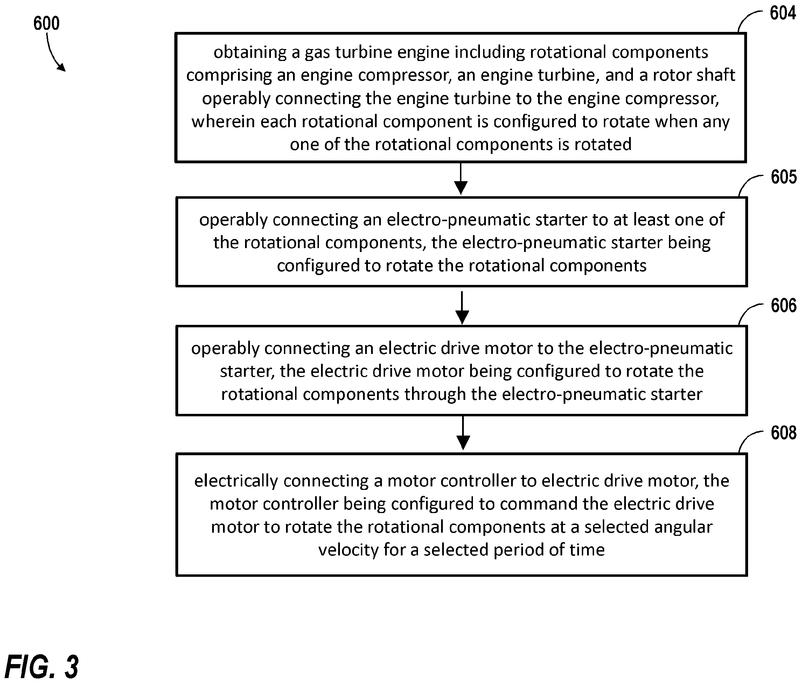

Turning now to FIG. 3 while continuing to reference FIGS. 1 and 2, FIG. 3 shows a flow diagram illustrating a method 600 of assembling an engine starting system 100 for a gas turbine engine 250, according to an example of the present disclosure. At block 604, a gas turbine engine 250 is obtained. As mentioned above, the gas turbine engine 250 may include rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. At block 605, an electro-pneumatic starter 120 is operably connected to at least one of the rotational components 260. As mentioned above, the electro-pneumatic starter 120 may comprise a turbine wheel 36 including a hub 40 integrally attached to a turbine rotor shaft 42 and a plurality of turbine blades 38 extending radially from the hub 40. As mentioned above, the turbine rotor shaft 42 is configured to rotate the rotational components 260 when air flows through the turbine blades 38 and rotates the turbine wheel 36.

At block 606, an electric drive motor 500 is operably connected to the electro-pneumatic starter 120. As mentioned above, the electric drive motor 500 being configured to rotate the rotational components 260 through the electro-pneumatic starter 120. At block 606, an electric drive motor 500 is operably connected to at least one of the rotational components 260. As mentioned above, the electric drive motor 500 is configured to rotate the rotational components 260. At block 608, a motor controller 420 is electrically connected to the electric drive motor 500. As mentioned above, the motor controller 420 is configured to command the electric drive motor 500 to rotate the rotational components 260 at a selected angular velocity for a selected period of time for cool-down motoring.

The method 600 may further include: fluidly connecting an auxiliary power unit 310 to the electro-pneumatic starter 120. The auxiliary power unit 114 is configured to provide air to the electro-pneumatic starter 120 to rotate the turbine blades 38. The method 600 may also further include: electrically connecting the electric drive motor 500 to the auxiliary power unit 114. The auxiliary power unit 114 is configured to generate electricity to power the electric drive motor 500.

While the above description has described the flow process of FIG. 3 in a particular order, it should be appreciated that unless otherwise specifically required in the attached claims that the ordering of the steps may be varied.

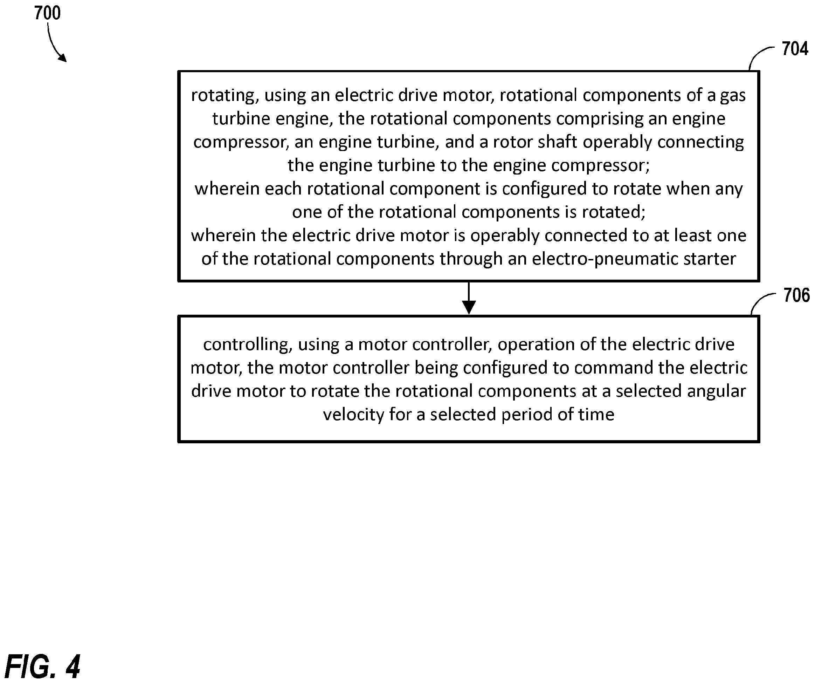

Turning now to FIG. 4 while continuing to reference FIGS. 1 and 2, FIG. 4 shows a flow diagram illustrating a method 700 of cooling a gas turbine engine 250, according to an embodiment of the present disclosure. At block 704, an electric drive motor 500 rotates rotational components 260 of a gas turbine engine 250. As described above, the rotational components 260 comprising an engine compressor 256, an engine turbine 258, and a rotor shaft 259 operably connecting the engine turbine 258 to the engine compressor 256. Each rotational component 260 is configured to rotate when any one of the rotational components 260 is rotated. The electric drive motor 500 is operably connected to at least one of the rotational components 260 through an electro-pneumatic starter 120. At block 706, a motor controller 320 controls operation of the electric drive motor 500. The motor controller 320 being configured to command the electric drive motor 500 to rotate the rotational components 260 at a selected angular velocity for a selected period of time. The rotation of the rotational components 260 at selected angular velocity for a selected period of time is engine cool-down motoring, or continuous low speed motoring to prevent bowing of the rotating components.

The method 700 may also include detecting a failure in a starter air valve 116 prior to rotating the gas turbine engine 250 with the electric drive motor 500. As mentioned above, the electric drive motor 500 may be used as a secondary means of cool-down motoring when the start air valve 116 fails. As also mentioned above, the starter air valve 116 is fluidly connected to an electro-pneumatic starter 120 and configured to provide air to an electro-pneumatic starter 120. The electro-pneumatic starter 120 is operably connected to at least one of the rotational components 260 and configured to rotate the rotational components 260. The method 700 may also include: detecting when a temperature of the gas turbine engine 250 is less than a selected temperature; and displaying a message on a cockpit display when the temperature of the gas turbine engine 250 is less than a selected temperature. The message may indicate that the gas turbine engine 250 has sufficiently cooled.

The method 700 may further include stopping the utilization of the electric drive motor 500 to rotate the gas turbine engine 250 when a temperature of the gas turbine engine 250 is less than a selected temperature. When the gas turbine engine 250 is less than the selected temperature the cool-down motoring may be complete and the electric drive motor 500 may no longer be needed to rotate the rotation components 260 of the gas turbine engine 250. The clutch 580 may disengage the electric drive motor 500 when no longer needed. Following the completion of the cool-down motoring, the pilot may desire to start the gas turbine engine 250, and thus the method 700 may also include: opening the starter air valve 116 after the message has been displayed on the cockpit display 430 indicating that a temperature of the gas turbine engine 250 is less than a selected temperature. Once the air valve 116 is opened, the method 700 may further include: rotating, using the electro-pneumatic starter 120, rotational components 260 of the gas turbine engine 250 when the starter air valve 116 is opened.

While the above description has described the flow process of FIG. 4 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fibre optics, or via electromagnetic radiation, wherein, when the computer program code is loaded into an executed by a computer, the computer becomes an device for practicing the exemplary embodiments. When implemented on a general-purpose microprocessor, the computer program code segments configure the microprocessor to create specific logic circuits.

While the present disclosure has been described with reference to an exemplary embodiment or embodiments, it will be understood by those skilled in the art that various changes may be made within the scope of the claims.

## Claims

1. A method of cooling a gas turbine engine (250), the method comprising:
rotating, using an electric drive motor (500), rotational components of a gas turbine engine, the rotational components comprising an engine compressor (256), an engine turbine (258), and a rotor shaft (259) operably connecting the engine turbine to the engine compressor;
wherein each rotational component is configured to rotate when any one of the rotational components is rotated;
wherein the electric drive motor is operably connected to at least one of the rotational components through an electro-pneumatic starter (120); and
detecting a failure in a starter air valve (116) prior to rotating the gas turbine engine with the electric drive motor, the starter air valve being fluidly connected to the electro-pneumatic starter and configured to provide air to the electro-pneumatic starter; and/or
detecting when a temperature of the gas turbine engine is less than a selected temperature;
displaying a message on a cockpit display when the temperature of the gas turbine engine is less than a selected temperature; and
stopping the utilization of the electric drive motor to rotate the gas turbine engine when a temperature of the gas turbine engine is less than a selected temperature.

2. The method of claim 1, further comprising:
controlling, using a motor controller (520), operation of the electric drive motor, the motor controller being configured to command the electric drive motor to rotate the rotational components at a selected angular velocity for a selected period of time.

3. The method of claim 1, further comprising:
opening a starter air valve after the message has been displayed on the cockpit display, the starter air valve being fluidly connected to the electro-pneumatic starter and configured to provide air to the electro-pneumatic starter.

4. The method of claim 3, further comprising:
rotating, using the electro-pneumatic starter, rotational components of the gas turbine engine when the starter air valve is opened, the electro-pneumatic starter comprising a turbine wheel (36) including a hub (40) integrally attached to a turbine rotor shaft and a plurality of turbine blades (38) extending radially from the hub, the turbine rotor shaft being operably connected to at least one of the rotational components and configured to rotate the rotational components when air flows through the turbine blades and rotates the turbine wheel.

5. A method of cooling a gas turbine engine (250), the method comprising:
rotating, using an electric drive motor (500), rotational components of a gas turbine engine, the rotational components comprising an engine compressor (256), an engine turbine (258), and a rotor shaft (259) operably connecting the engine turbine to the engine compressor;
wherein each rotational component is configured to rotate when any one of the rotational components is rotated;
wherein the electric drive motor is operably connected to at least one of the rotational components through an electro-pneumatic starter (120);
detecting when a temperature of the gas turbine engine is less than a selected temperature;
displaying a message on a cockpit display when the temperature of the gas turbine engine is less than a selected temperature; and
opening a starter air valve (116) after the message has been displayed on the cockpit display, the starter air valve being fluidly connected to the electro-pneumatic starter and configured to provide air to the electro-pneumatic starter;

6. The method of claim 5, further comprising:
controlling, using a motor controller (520), operation of the electric drive motor, the motor controller being configured to command the electric drive motor to rotate the rotational components at a selected angular velocity for a selected period of time.

7. The method of claim 5, further comprising:
detecting a failure in a starter air valve prior to rotating the gas turbine engine with the electric drive motor, the starter air valve being fluidly connected to the electro-pneumatic starter and configured to provide air to the electro-pneumatic starter.

8. The method of claim 5, further comprising:
stopping the utilization of the electric drive motor to rotate the gas turbine engine when a temperature of the gas turbine engine is less than a selected temperature.

9. The method of claim 5, further comprising:
rotating, using the electro-pneumatic starter, rotational components of the gas turbine engine when the starter air valve is opened, the electro-pneumatic starter comprising a turbine wheel (36) including a hub (40) integrally attached to a turbine rotor shaft and a plurality of turbine blades (38) extending radially from the hub, the turbine rotor shaft being operably connected to at least one of the rotational components and configured to rotate the rotational components when air flows through the turbine blades and rotates the turbine wheel.

## Patentansprüche

1. Verfahren zum Kühlen eines Gasturbinentriebwerks (250), wobei das Verfahren umfasst:
Drehen von Rotationskomponenten eines Gasturbinentriebwerks unter Verwendung eines elektrischen Antriebsmotors (500),
wobei die Rotationskomponenten einen Triebwerkskompressor (256), eine Triebwerksturbine (258) und eine Rotorwelle (259), die die Triebwerksturbine mit dem Triebwerkskompressor wirkverbindet, umfasst,
wobei jede Rotationskomponente konfiguriert ist, um sich zu drehen, wenn eine der Rotationskomponenten gedreht wird;
wobei der elektrische Antriebsmotor durch einen elektropneumatischen Starter (120) mit mindestens einer der Rotationskomponenten wirkverbunden wird; und
Erfassen eines Versagens in einem Starter-Luftventil (116) vor dem Drehen des Gasturbinentriebwerks mit dem elektrischen Antriebsmotor, wobei das Starter-Luftventil fluidisch mit dem elektropneumatischen Starter verbunden und konfiguriert ist, um dem elektropneumatischen Starter Luft bereitzustellen; und/oder
Erfassen, wenn eine Temperatur des Gasturbinentriebwerks niedriger als eine ausgewählte Temperatur ist;
Anzeigen einer Nachricht auf einer Cockpit-Anzeige, wenn die Temperatur des Gasturbinentriebwerks niedriger als eine ausgewählte Temperatur ist; und
Stoppen der Verwendung des elektrischen Antriebsmotors zum Drehen des Gasturbinentriebwerks, wenn eine Temperatur des Gasturbinentriebwerks niedriger als eine ausgewählte Temperatur ist.

2. Verfahren nach Anspruch 1, ferner umfassend:
Steuern des Betriebs des elektrischen Antriebsmotors unter Verwendung einer Motorsteuerung (520), wobei die Motorsteuerung konfiguriert ist, um dem elektrischen Antriebsmotor zu befehlen, die Rotationskomponenten mit einer ausgewählten Winkelgeschwindigkeit für eine ausgewählte Zeitdauer zu drehen.

3. Verfahren nach Anspruch 1, ferner umfassend:
Öffnen eines Starter-Luftventils, nachdem die Nachricht auf der Cockpit-Anzeige angezeigt wurde, wobei das Starter-Luftventil fluidisch mit dem elektropneumatischen Starter verbunden und konfiguriert ist, um dem elektropneumatischen Starter Luft bereitzustellen.

4. Verfahren nach Anspruch 3, ferner umfassend:
Drehen von Rotationkomponenten des Gasturbinentriebwerks unter Verwendung des elektropneumatischen Starters, wenn das Starter-Luftventil geöffnet ist, wobei der elektropneumatische Starter ein Turbinenrad (36) umfasst, das eine Nabe (40) beinhaltet, die einstückig an einer Turbinenrotorwelle angebracht ist, und eine Vielzahl von Turbinenschaufeln (38), die sich radial von der Nabe erstrecken, wobei die Turbinenrotorwelle mit mindestens einer der Rotationskomponenten wirkverbunden und konfiguriert ist, um die Rotationskomponenten zu drehen, wenn Luft durch die Turbinenschaufeln strömt und das Turbinenrad dreht.

5. Verfahren zum Kühlen eines Gasturbinentriebwerks (250), wobei das Verfahren umfasst:
Drehen von Rotationskomponenten eines Gasturbinentriebwerks unter Verwendung eines elektrischen Antriebsmotors (500),
wobei die Rotationskomponenten einen Triebwerkskompressor (256), eine Triebwerksturbine (258) und eine Rotorwelle (259), die die Triebwerksturbine mit dem Triebwerkskompressor wirkverbindet, umfasst,
wobei jede Rotationskomponente konfiguriert ist, um sich zu drehen, wenn eine der Rotationskomponenten gedreht wird;
wobei der elektrische Antriebsmotor durch einen elektropneumatischen Starter (120) mit mindestens einer der Rotationskomponenten wirkverbunden wird;
Erfassen, wenn eine Temperatur des Gasturbinentriebwerks niedriger als eine ausgewählte Temperatur ist;
Anzeigen einer Nachricht auf einer Cockpit-Anzeige, wenn die Temperatur des Gasturbinentriebwerks niedriger als eine ausgewählte Temperatur ist; und
Öffnen eines Starter-Luftventils (116), nachdem die Nachricht auf der Cockpit-Anzeige angezeigt wurde, wobei das Starter-Luftventil fluidisch mit dem elektropneumatischen Starter verbunden und konfiguriert ist, um dem elektropneumatischen Starter Luft bereitzustellen.

6. Verfahren nach Anspruch 5, ferner umfassend:
Steuern des Betriebs des elektrischen Antriebsmotors unter Verwendung einer Motorsteuerung (520), wobei die Motorsteuerung konfiguriert ist, um dem elektrischen Antriebsmotor zu befehlen, die Rotationskomponenten mit einer ausgewählten Winkelgeschwindigkeit für eine ausgewählte Zeitdauer zu drehen.

7. Verfahren nach Anspruch 5, ferner umfassend:
Erfassen eines Versagens in einem Starter-Luftventil vor dem Drehen des Gasturbinentriebwerks mit dem elektrischen Antriebsmotor, wobei das Starter-Luftventil fluidisch mit dem elektropneumatischen Starter verbunden und konfiguriert ist, um dem elektropneumatischen Starter Luft bereitzustellen.

8. Verfahren nach Anspruch 5, ferner umfassend:
Stoppen der Verwendung des elektrischen Antriebsmotors zum Drehen des Gasturbinentriebwerks, wenn eine Temperatur des Gasturbinentriebwerks niedriger als eine ausgewählte Temperatur ist.

9. Verfahren nach Anspruch 5, ferner umfassend:
Drehen von Rotationkomponenten des Gasturbinentriebwerks unter Verwendung des elektropneumatischen Starters, wenn das Starter-Luftventil geöffnet ist, wobei der elektropneumatische Starter ein Turbinenrad (36) umfasst, das eine Nabe (40) beinhaltet, die einstückig an einer Turbinenrotorwelle angebracht ist, und eine Vielzahl von Turbinenschaufeln (38), die sich radial von der Nabe erstrecken, wobei die Turbinenrotorwelle mit mindestens einer der Rotationskomponenten wirkverbunden und konfiguriert ist, um die Rotationskomponenten zu drehen, wenn Luft durch die Turbinenschaufeln strömt und das Turbinenrad dreht.

## Revendications

1. Procédé de refroidissement d'un moteur à turbine à gaz (250), le procédé comprenant :
le fait de faire tourner, à l'aide d'un moteur d'entraînement électrique (500), des composants rotatifs d'un moteur à turbine à gaz, les composants rotatifs comprenant un compresseur de moteur (256), une turbine de moteur (258) et un arbre de rotor (259) connectant de manière fonctionnelle la turbine de moteur au compresseur de moteur ;
dans lequel chaque composant rotatif est configuré pour tourner lorsque l'un quelconque des composants rotatifs est tourné ;
dans lequel le moteur d'entraînement électrique est connecté de manière fonctionnelle à au moins l'un des composants rotatifs par l'intermédiaire d'un démarreur électropneumatique (120) ; et
la détection d'une défaillance dans une soupape à air de démarreur (116) avant de faire tourner le moteur à turbine à gaz avec le moteur d'entraînement électrique, la soupape à air de démarreur étant connectée fluidiquement au démarreur électropneumatique et configurée pour fournir de l'air au démarreur électropneumatique ; et/ou
le fait de détecter lorsqu'une température du moteur à turbine à gaz est inférieure à une température sélectionnée ;
l'affichage d'un message sur un écran de cockpit lorsque la température du moteur à turbine à gaz est inférieure à une température sélectionnée ; et
l'arrêt de l'utilisation du moteur d'entraînement électrique pour faire tourner le moteur à turbine à gaz lorsqu'une température du moteur à turbine à gaz est inférieure à une température sélectionnée.

2. Procédé selon la revendication 1, comprenant en outre :
la commande, à l'aide d'un dispositif de commande de moteur (520), du fonctionnement du moteur d'entraînement électrique, le dispositif de commande de moteur étant configuré pour commander au moteur d'entraînement électrique de faire tourner les composants rotatifs à une vitesse angulaire sélectionnée pendant une période de temps sélectionnée.

3. Procédé selon la revendication 1, comprenant en outre :
l'ouverture d'une soupape à air de démarreur après que le message a été affiché sur l'écran du cockpit, la soupape à air de démarreur étant connectée fluidiquement au démarreur électropneumatique et configurée pour fournir de l'air au démarreur électropneumatique.

4. Procédé selon la revendication 3, comprenant en outre :
le fait de faire tourner, à l'aide du démarreur électropneumatique, des composants rotatifs du moteur à turbine à gaz lorsque la soupape à air de démarreur est ouverte, le démarreur électropneumatique comprenant une roue de turbine (36) comportant un moyeu (40) solidaire d'un arbre de rotor de turbine et une pluralité d'aubes de turbine (38) s'étendant radialement à partir du moyeu, l'arbre de rotor de turbine étant fonctionnellement connecté à au moins l'un des composants rotatifs et configuré pour faire tourner les composants rotatifs lorsque l'air s'écoule à travers les aubes de turbine et fait tourner la roue de turbine.

5. Procédé de refroidissement d'un moteur à turbine à gaz (250), le procédé comprenant :
le fait de faire tourner, à l'aide d'un moteur d'entraînement électrique (500), des composants rotatifs d'un moteur à turbine à gaz, les composants rotatifs comprenant un compresseur de moteur (256), une turbine de moteur (258) et un arbre de rotor (259) connectant de manière fonctionnelle la turbine de moteur au compresseur de moteur ;
dans lequel chaque composant rotatif est configuré pour tourner lorsque l'un quelconque des composants rotatifs est tourné ;
dans lequel le moteur d'entraînement électrique est connecté de manière fonctionnelle à au moins l'un des composants rotatifs par l'intermédiaire d'un démarreur électropneumatique (120) ; et
le fait de détecter lorsqu'une température du moteur à turbine à gaz est inférieure à une température sélectionnée ;
l'affichage d'un message sur un écran de cockpit lorsque la température du moteur à turbine à gaz est inférieure à une température sélectionnée ; et
l'ouverture d'une soupape à air de démarreur (116) après que le message a été affiché sur l'écran du cockpit, la soupape à air de démarreur étant connectée fluidiquement au démarreur électropneumatique et configurée pour fournir de l'air au démarreur électropneumatique ;

6. Procédé selon la revendication 5, comprenant en outre :
la commande, à l'aide d'un dispositif de commande de moteur (520), du fonctionnement du moteur d'entraînement électrique, le dispositif de commande de moteur étant configuré pour commander au moteur d'entraînement électrique de faire tourner les composants rotatifs à une vitesse angulaire sélectionnée pendant une période de temps sélectionnée.

7. Procédé selon la revendication 5, comprenant en outre :
la détection d'une défaillance dans une soupape à air de démarreur avant de faire tourner le moteur à turbine à gaz avec le moteur d'entraînement électrique, la soupape à air de démarreur étant connectée fluidiquement au démarreur électropneumatique et configurée pour fournir de l'air au démarreur électropneumatique.

8. Procédé selon la revendication 5, comprenant en outre :
l'arrêt de l'utilisation du moteur d'entraînement électrique pour faire tourner le moteur à turbine à gaz lorsqu'une température du moteur à turbine à gaz est inférieure à une température sélectionnée.

9. Procédé selon la revendication 5, comprenant en outre :
le fait de faire tourner, à l'aide du démarreur électropneumatique, des composants rotatifs du moteur à turbine à gaz lorsque la soupape à air de démarreur est ouverte, le démarreur électropneumatique comprenant une roue de turbine (36) comportant un moyeu (40) solidaire d'un arbre de rotor de turbine et une pluralité d'aubes de turbine (38) s'étendant radialement à partir du moyeu, l'arbre de rotor de turbine étant fonctionnellement connecté à au moins l'un des composants rotatifs et configuré pour faire tourner les composants rotatifs lorsque l'air s'écoule à travers les aubes de turbine et fait tourner la roue de turbine.
